# Europäisches Patentamt
# European Patent Office
# Office européen des brevets

(19)

(11) Numéro de publication: **0 022 733**
**B1**

(12) **FASCICULE DE BREVET EUROPEEN**

(45) Date de publication du fascicule du brevet:
**25.05.83**

(21) Numéro de dépôt: **80420080.6**

(22) Date de dépôt: **01.07.80**

(51) Int. Cl.³: **A 01 G 23/04**

(54) Machine pour l'arrachage d'arbustes.

(30) Priorité: **11.07.79 FR 7918511**

(43) Date de publication de la demande:
**21.01.81 Bulletin 81/3**

(45) Mention de la délivrance du brevet:
**25.05.83 Bulletin 83/21**

(84) Etats contractants désignés:
**AT BE CH DE GB IT LI LU NL SE**

(73) Titulaire: **Berthollet, Pierre, La Bouvière, Saint Sulpice
F-73160 Cognin (FR)**

(72) Inventeur: **Berthollet, Pierre, La Bouvière, Saint Sulpice
F-73160 Cognin (FR)**

(74) Mandataire: **Maureau, Bernard, Cabinet GERMAIN &
MAUREAU Le Britannia - Tour C 20, Boulevard Eugène
Déruelle, F-69003 Lyon (FR)**

(56) Documents cités:
**DE-A-2 845 222
US-A-2 863 258
US-A-3 017 708
US-A-3 676 941**

BUNDESDRUCKEREI BERLIN

## Machine pour l'arrachage d'arbustes

L'invention a pour objet une machine destinée à l'arrachage d'arbustes et de façon générale de plants, en vue de leur transplantation d'un lieu de culture à leur emplacement définitif, et ce dans des conditions telles que le plant soit arraché, transporté et replanté avec une motte de terre enveloppant sa base et ses racines.

Cette machine est du type de celles comportant, portées par un même châssis monté sur le relevage hydraulique à trois points en arrière d'un tracteur, une bêche rotative découpant une motte de terre autour de l'arbuste à arracher et une pince saisissant le collet de cet arbuste pour son dégagement hors de la terre, après action de la bêche.

Des machines répondant à ce but ont déjà été proposées; mais aucune ne permet un arrachage intensif des arbustes. C'est ainsi en effet qu'une machine conforme au DE-A-2 845 222 allie une bêche et une pince; mais de par sa forme en arc de cercle et de par son articulation autour d'un axe horizontal, la bêche ne peut pas travailler à cadence rapide et demeurer dans le sol entre deux opérations successives d'arrachage; la forme de la bêche confère en outre à la motte de terre une forme telle qu'elle est très friable et que la plus grande partie de la terre retombe après arrachage de l'arbuste.

Une machine conforme au US-A-3 017 708 est équipée d'une bêche permettant l'obtention d'une motte ayant une meilleure tenue. La bêche est en effet constituée par une couronne porteuse de plusieurs lames et animée d'un mouvement de rotation autour d'un axe vertical. La pénétration de la bêche dans le sol est cependant alors difficile et interdit ici encore de laisser la bêche dans le sol entre deux opérations successives d'arrachage.

L'invention remédie à ces inconvénients. Elle a pour objet une machine qui est du type général ci-dessus rappelé, mais dont l'originalité essentielle réside dans l'agencement de sa bêche.

Sa bêche est en effet constituée par une unique lame solidaire d'une couronne qui présente une ouverture et est montée mobile en rotation dans une autre couronne qui, solidaire d'une patte de fixation sur un châssis porté à l'arrière d'un tracteur, possède une ouverture d'angle sensiblement égal, grâce à laquelle elle se centre autour de l'arbuste à arracher, des moyens étant prévus pour déplacer la couronne intérieure dans celle extérieure et amener ainsi la bêche à découper une motte de terre autour de l'arbuste dont le collet est centré dans les deux couronnes concentriques de l'outil.

Pour l'arrachage d'un arbuste, la couronne extérieure fixe servant de support et de guide à celle intérieure munie de la lame de la bêche est, de préférence, située latéralement par rapport au tracteur et son ouverture est dirigée vers l'avant. Il est cependant avantageux qu'en période de déplacement du tracteur hors d'une zone d'arrachage l'outil ne déborde pas latéralement et que, pour réduire l'encombrement transversal, il soit alors situé entièrement en arrière du tracteur. Ce résultat est atteint en articulant sur le châssis de la machine la patte portant la couronne extérieure et en reliant ce châssis et cette patte par un vérin.

Les moyens utilisés pour provoquer le déplacement de la couronne intérieure et donc de la bêche par rapport à la couronne extérieure peuvent être quelconques. C'est ainsi que, suivant une forme d'exécution, la couronne intérieure mobile présente, sur l'une de ses faces, avantageusement sa face extérieure, une denture avec laquelle engrène au moins un pignon qui est porté par la couronne extérieure fixe et qui reçoit son mouvement de rotation d'un moteur, avantageusement porté par la même couronne fixe.

De toute façon, l'invention sera bien comprise et ses avantages ainsi que d'autres caractéristiques ressortiront bien de la discription que suit, en référence au dessin schématique annexé représentant, à titre d'exemple non limitatif, une forme d'exécution de cette machine pour l'arrachage d'arbustes:

Fig. 1 en est une vue en plan par dessus alors que la machine se présente entre deux lignes d'arbustes, cecis avant qu'elle ait commencé l'opération d'arrachage;

Fig. 2 est la même vue, après que la machine se soit mise en position d'arrachage;

Fig. 3 est une vue de côté en élévation correspondant à la fig. 2;

Fig. 4 et 5 sont des vues identiques, respectivement à la fig. 2 et à la fig. 3, lorsque l'outil s'est présenté autour d'un arbuste à arracher;

Fig. 6 et 7 sont les mêmes vues au cours de l'opération de découpage de la motte de terre autour de l'arbuste;

Fig. 8 est une vue de côté en élévation au cours de l'opération d'extraction de l'arbuste;

Fig. 9 est une vue en plan au cours de l'opération de dépose de l'arbuste précédemment arraché;

Fig. 10 est, à plus grande échelle, une vue en plan de la machine d'arrachage proprement dite, et

Fig. 11 en est, à échelle encore agrandie, une vue en coupe suivant 11-11 de fig. 10.

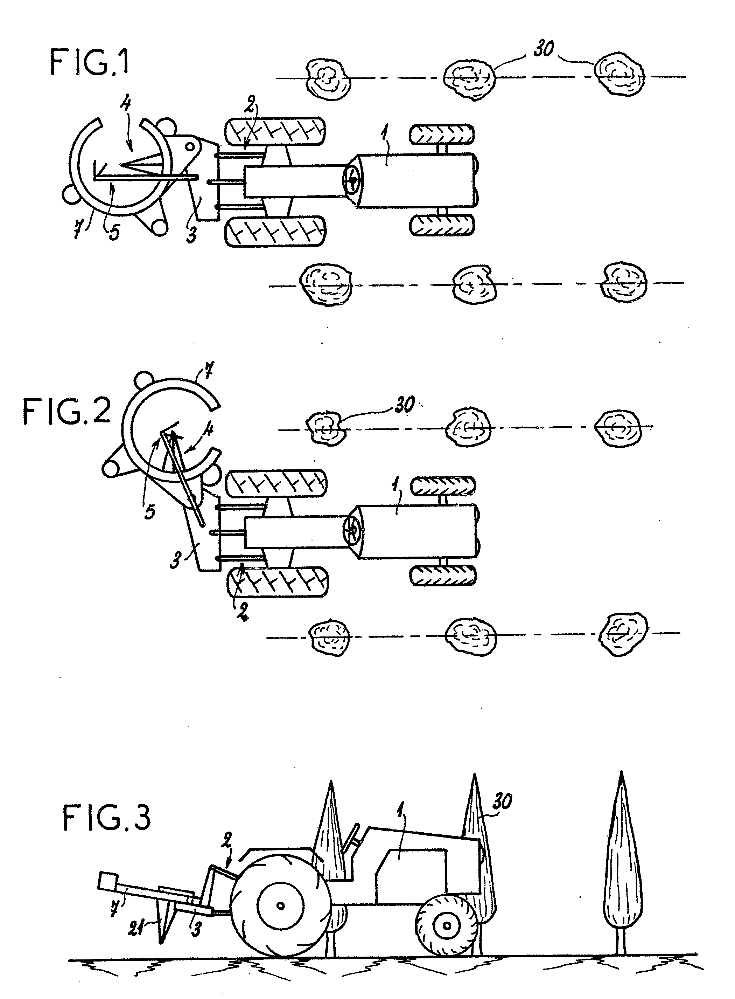

Aux fig. 1 à 9, (1) désigne un tracteur agricole de type quelconque, équipé d'un système de relevage hydraulique à trois points, désigné de façon générale par (2), et dont le type est connu en soi. Ce système de relevage (2) sert de support à un châssis (3) sur lequel est monté l'ensemble de l'outillage qui permet l'arrachage des arbustes et consiste essentiellement en deux outils, à savoir respectivement une bêche et une pince d'extraction, qui sont désignées de façon générale respectivement par (4) et par (5).

Concernant la bêche (4), l'élément de base lui servant de support est une patte (6) qui est articulée en (6a) sur le chassis (3) et sert de support à une couronne (7) placée dans un plan horizontal ou sensiblement horizontal. Cette couronne (7) présente une section générale en forme de U dont les deux branches sont horizontales et elle possède une ouverture (8) qui, lorsque la machine est en position d'arrachage, se trouve dirigée vers l'avant, ce qui est le cas dans toutes les positions représentées au dessin, à l'exception de celle montrée à la fig. 1.

La couronne (7) sert de glissière à une couronne intérieure (9) présentant elle-même une ouverture dont l'angle est sensiblement égal à celui de l'ouverture (8) de ladite couronne (7). Le guidage de cette couronne (9) dans la couronne (7) est avantageusement réalisé par coopération, avec une rainure (10) de cette couronne (9), d'un patin de guidage (12) qui est rapporté entre les deux branches de la couronne extérieure fixe (7).

Sur sa face verticale extérieure, la couronne intérieure (9) présente une denture droite (13) avec laquelle engrènent deux pignons (14) dont les axes sont portés, pour l'un, par la couronne extérieure (7), et pour l'autre par la patte (6). Ces deux pignons (14) sont liés par des chaînes de transmission (15) à un pignon (16) entraîné par un moteur hydraulique (17) porté par une patte (18) solidaire de la couronne extérieure (7). Ainsi ce moteur (17) entraîne le déplacement de la couronne intérieure (9) dans celle extérieure (7) par l'intermédiaire du pignon (16), des chaînes (15) et des pignons (14).

Dans sa branche horizontale inférieure, la couronne extérieure fixe (7) présente une rainure (19), au travers de laquelle passe un doigt (20) servant de tête à l'outil proprement dit (21). Cet outil consiste en une lame incurvée servant de bêche pour le découpage de la motte de terre autour des racines et de la base de l'arbuste à arracher.

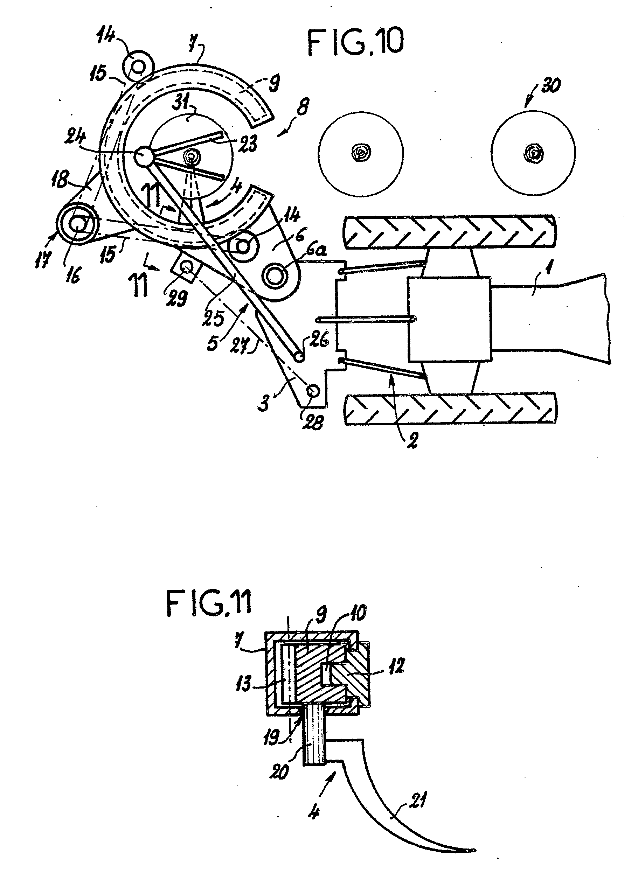

Concernant la pince d'extraction (5) qui constitue le deuxième outil de la machine, elle comporte, comme le montre la fig. 10, deux mors (23) qui sont articulés autour d'un axe (24) vertical ou sensiblement vertical et auxquels des mouvements d'ouverture et de fermeture sont donnés par un mécanisme non représenté au dessin. Cette pince (23 – 24) est portée par un bras (25) qui est articulé en (26) sur le chassis (3), au moyen par exemple d'un système d'articulation du genre cardan; et deux vérins, qui sont portés par le chassis (3) mais ne sont pas représentés au dessin, permettent à ce bras (5), d'une part des mouvements de déplacement dans un plan vertical et, d'autre part, des mouvements de déplacement latéral.

Le chassis (3) sert enfin de support à un vérin désigné à la fig. 10 par la ligne (27), vérin qui est articulé, d'une part, sur un axe (28) porté par ce chassis (3) et, d'autre part, sur un axe (29) porté par la patte (6) servant de support à l'outil de découpage.

Lorsque la machine est en période de repos ou en position de déplacement, soit sur une route, soit entre deux rangées d'arbustes, mais avant que l'opération d'arrachage de ces arbustes ait commencé, l'ensemble de l'outillage est placé en arrière du tracteur (1), sensiblement dans son axe longitudinal, comme le montre la fig. 1; et c'est précisément le rôle du vérin schématisé par la ligne (27) de permettre à la patte (6) servant de support à la bêche de se trouver alignée avec le tracteur.

Par contre, lorsque commencent les opérations d'arrachage, l'outillage de découpage de la terre est déporté latéralement sur la gauche du tracteur, jusqu'à atteindre la position visible dans les autres figures du dessin, et cette position est obtenue par action du vérin désigné par la ligne (27). Dans cette position, les ouvertures (8) de la couronne extérieure fixe (7) et de la couronne intérieure mobile (9) sont dirigées vers l'avant; et ces couronnes sont sensiblement alignées avec les arbustes (30). C'est la position montrée aux fig. 2, 3 et 10.

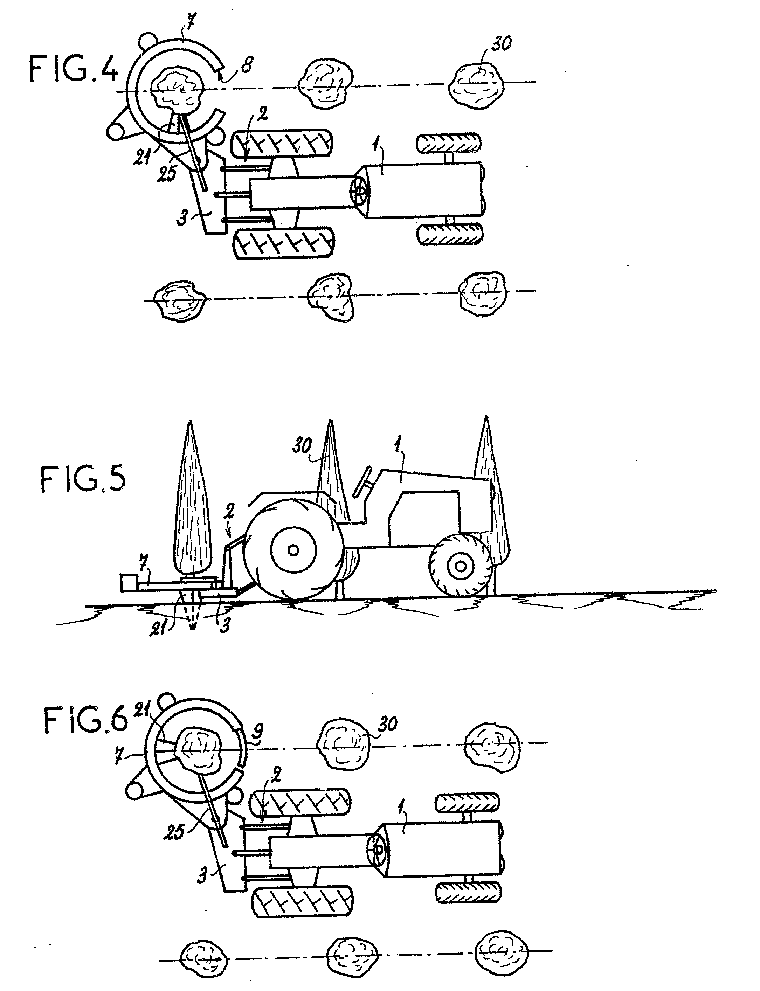

Pour arracher le premier arbuste (30) de la ligne, la première opération nécessite de faire pénétrer la bêche (21) dans le sol. Cette pénétration s'obtient automatiquement sous l'effet du poids de la machine, au fur et à mesure de l'avancement du tracteur, et ce jusqu'à ce que la machine atteingne la position représentée par les fig. 4 et 5, position dans laquelle le premier arbuste (30) se trouve placé au centre des deux couronnes (7) et (9), à l'intérieur desquelles il a pénétré grâce à leurs ouvertures (8).

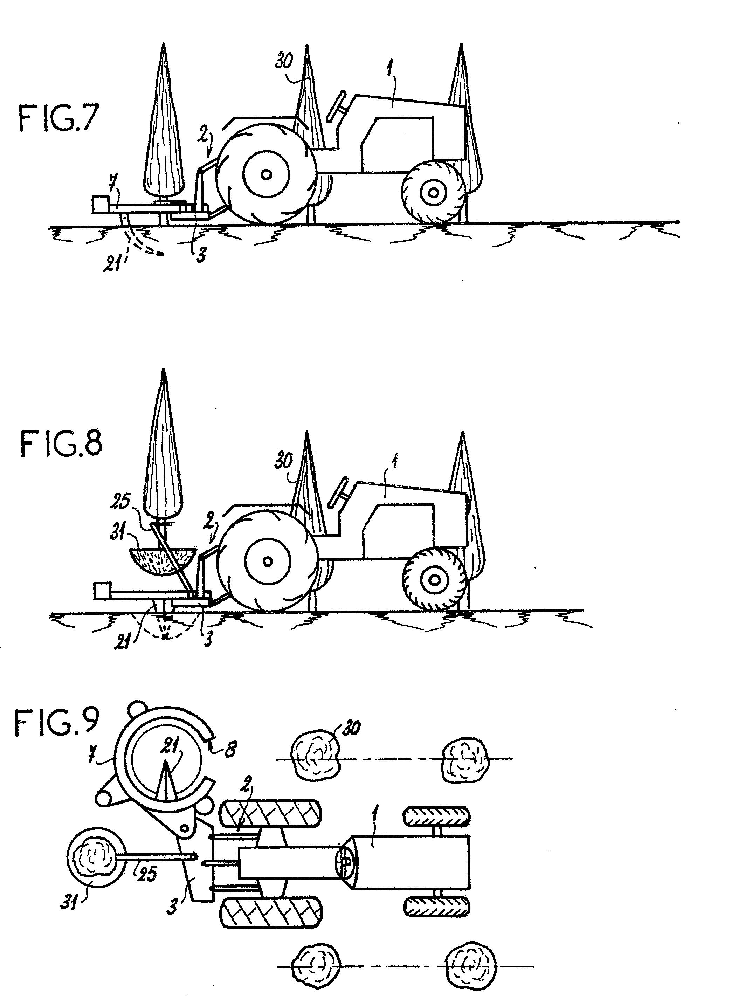

A ce stade, l'avancement du tracteur (1) cesse et l'opérateur met en service le moteur hydraulique (17) destiné à l'entraînement de la couronne intérieure (9). Cette couronne (9) se déplace dans celle extérieure (7), comme le montrent les fig. 6 et 7; et au cours de ce déplacement, la lame ou bêche (21) est entraînée et découpe la terre autour des racines et de la base de l'arbuste (30) en donnant ainsi lieu à la formation d'une motte de terre.

Lorsque la bêche (21) a terminé sa rotation de 360° autour de l'axe vertical des couronnes (7) et (9), elle cesse son mouvement de déplacement, la motte de terre étant entièrement découpée; et c'est alors que la pince d'extraction (23-24-25) entre en fonctionnement; les mors (23) de la pince se referment en effet autour du collet de l'arbuste (30) et le bras (25) est soulevé par son vérin de commande, provoquant ainsi, comme le montre la fig. 8, l'arrachage hors du sol de l'ensemble constitué par l'arbuste (30) et la motte de terre (31) enveloppant sa base et ses racines.

Cette opération d'arrachage proprement dit est suivie par une opération de dépose de l'arbuste qui a été arraché. Au cours de cette opération, visible à la fig. 9, le bras (25) et la pince d'extraction (23-24) sont déplacés latéralement par un vérin jusqu'à ce que l'arbuste arraché soit sensiblement aligné avec le tracteur (1). Il ne reste plus qu'à faire redescendre le bras (25) et à ouvrir la pince (23-24) pour que l'arbuste et sa motte de terre soient déposés sur le sol.

Comme il va de soi, l'invention ne se limite pas aux seules formes d'exécution de cette machine et des divers éléments la constituant qui ont été ci-dessus indiquées à titre d'exemples; elle en embrasse, au contraire, toutes les variantes de réalisation; et c'est ainsi notamment que:

— la machine d'arrachage peut être associée à un engin de déplacement autre qu'un tracteur;
— que cet engin peut être indépendant ou non de la machine d'arrachage;
— que la couronne extérieure fixe peut présenter deux ouvertures situées dans le prolongement l'une de l'autre, afin de permettre le découpage des mottes de terre sans qu'il soit nécessaire de relever l'ensemble après chaque opération de découpage, et ce par exemple pour permettre de réaliser en deux phases nettement séparées dans le temps, respectivement le découpage des mottes et l'arrachage des arbustes;
— et que des moyens peuvent être prévus pour permettre le réglage des dimensions de la motte de terre découpée dans le sol.

## Revendications

1. Machine pour l'arrachage d'arbustes, du type de celles comportant, porté par un même chassis (3) monté sur le relevage hydraulique à trois points en arrière d'un tracteur (1):

— d'une part, une bêche rotative (21) qui est portée par une couronne (9) animée d'un mouvement de rotation autor de son axe vertical pour découper une motte de terre autour de l'arbuste à arracher,
— et d'autre part, par une pince (23) saisissant le collet de cet arbuste pour son dégagement hors de la terre après action de la bêche,

caractérisée en ce que sa bêche est constituée par une unique lame (21) solidaire de la couronne (9) qui présente une ouverture (8) et est montée mobile en rotation dans une autre couronne (7) qui, solidaire d'une patte (6) de fixation sur un chassis (3) porté à l'arrière du tracteur, possède une ouverture d'angle (8) sensiblement égal à celui de l'ouverture (8) de la couronne (9), ouverture grâce à laquelle elle se centre autour de l'arbuste à arracher, des moyens étant prévus pour déplacer la couronne intérieure (9) dans celle extérieure (7) et amener ainsi la bêche (21) à découper une motte de terre autour de l'arbuste dont le collet est centré entre les deux couronnes concentriques (7, 9) de l'outil.

2. Machine pour l'arrachage d'arbustes selon la revendication 1, caractérisée en ce que la patte (6) portant la couronne extérieure (7) servant de support à la bêche (21) est articulée sur le chassis (3) de la machine et est reliée à lui par un vérin (27) grâce auquel cette patte (6) et la bêche (21) avec les couronnes (7, 9) peuvent être déplacées angulairement par rapport au tracteur (1).

3. Machine pour l'arrachage d'arbustes selon l'une quelconque des revendications 1 et 2, caractérisée en ce que la couronne mobile intérieure (9) présente, sur l'une de ses faces, avantageusement sa face extérieure, une denture (13) avec laquelle engrène au moins un pignon (14) qui est porté par la couronne extérieure fixe (7) et qui reçoit son mouvement de rotation d'un moteur (17), avantageusement porté par la même couronne fixe.

## Patentansprüche

1. Maschine zum Auspflanzen von jungen Bäumen mit folgenden Teilen, die an einem an der Dreipunkt-Hydraulik einer Zugmaschine (1) montierbaren gemeinsamen Chassis (3) angebracht sind:

— einem einen rotierbaren Spaten (21) tragenden Kranz, der zum Ausstechen eines Erdballens um den auszupflanzenden Baum mit einer Drehbewegung um seine vertikale Achse beaufschlagbar ist,
— und einer Zangenvorrichtung (23), mittels derer der Bund des Baumes ergreifbar und nach dem Wirksamwerden des Spatens aus dem Erdreich heraushebbar ist,

dadurch gekennzeichnet,

— daß der Spaten aus einer einzigen mit dem Kranz (9) fest verbundenen Klinge (21) besteht,
— daß der Kranz (9) eine Öffnung (8) besitzt und drehbeweglich in einem weiteren Kranz (7) montiert ist, der mit einem an dem genannten Chassis (3) angebrachten Befestigungsteil (6) fest verbunden ist und eine Winkelöffnung aufweist, die im wesentlichen die gleiche Größe besitzt wie die Öffnung (8) des erstgenannten Kranzes (9) und mittels derer er um dem auszupflanzenden Baum herum zentrierbar ist,
— und daß Mittel vorgesehen sind, durch welche der innere Kranz (9) in dem äußeren Kranz (7) verschiebbar ist, wodurch der Spaten (21) derart geführt wird, daß ein Erdballen um den Baum ausgestochen wird, dessen Bund zwischen den beiden konzentrischen Kränzen (7, 9) zentriert ist.

2. Maschine nach Anspruch 1, dadurch gekennzeichnet, daß das Befestigungsteil (6), welches den als Lagerung für den Spaten (21) dienenden äußeren Kranz (7) trägt, an dem Chassis (3) der Maschine angelenkt und über eine Winde (27) mit diesem (3) verbunden ist, mittels derer das Befestigungsteil (6) und der Spaten (21) mit den beiden Kränzen (7, 9) relativ zu der Zugmaschine (1) in ihrer Winkelposition verschiebbar sind.

3. Maschine nach Anspruch 1 oder 2, dadurch gekennzeichnet, daß der innere bewegliche Kranz (9) an einer seiner Flächen, vorzugsweise an seiner Innenfläche eine Verzahnung (13) besitzt, die mit wenigstens einem Ritzel (14) im Eingriff steht, das von dem äußeren feststehenden Kranz (7) getragen und von einem vorzugsweise von demselben äußeren Kranz (7) getragenen Motor antreibbar ist.

## Claims

1. A machine to uproot bushes, of the type of those carried by a single framework (3) mounted at three points on the hydraulic lifter at the rear of a tractor (1) and comprising:

— on one hand, ar rotary digger (21), carried by a ring (9) propelled with rotary movement about its vertical axis, to cut out a ball of earth around the bush to be uprooted,
— and on the other hand, a gripper (23) seizing the stem of the bush to extract it from the ground after operation of the digger,

characterized in that its digger is formed by a single blade (21), integral with the ring (9), which possesses a gap (8) and is mounted free to rotate in another ring (7) which, integral with a fixing clamp (6) on a framework (3) carried at the rear of the tractor, possesses a gap with angle (8) approximately equal to that of the gap (8) of ring (9), this gap enabling it to centre itself around the bush to be uprooted, means being provided to displace the internal ring (9) in the external one (7) and thus to cause the digger (21) to cut out a ball of earth around the bush, the stem of which is centred between the two concentric rings (7, 9) of the tool.

2. A machine to uproot bushes according to claim 1, characterized in that the fixing clamp (6) carrying the external ring (7) serving as a support for the digger (21) is articulated on the frame (3) of the machine and is connected to it by a jack (27) due to which this clamp (6) and the digger (21) with the rings (7, 9) may be shiftes in angle relatively to tractor (1).

3. A machine to uproot bushes according to either of claims 1 and 2, characterized in that the movable internal ring (9) presents gear teeth on one of its faces and preferably on its external face, with which engages at least one pinion (14) that is carried by the fixed external ring (7) and that receives its rotatory movement from a motor (17), preferably carried by the same fixed ring.

FIG.1

FIG.2

FIG.3

FIG.4

FIG.5

FIG.6

FIG.7

FIG.8

FIG.9

# FIG.10

# FIG.11